# EUROPEAN PATENT SPECIFICATION

(11) **EP 1 520 437 B1**
(45) Date of publication and mention of the grant of the patent: **06.06.2007**
(21) Application number: 03715188.3
(22) Date of filing: 18.04.2003
(51) Int. Cl.: H04Q 7/22, H04M 3/487

(54) **METHOD FOR CHANGING THE CONTENT OF A MESSAGE EXCHANGED BETWEEN TWO TELEPHONES**
VERFAHREN ZUR VERÄNDERUNG DES INHALTS VON EINER ZWISCHEN ZWEI TELEFONEN AUSGETAUSCHTEN NACHRICHT
PROCEDE POUR MODIFIER LE CONTENU D'UN MESSAGE ECHANGE ENTRE DEUX TELEPHONES

(30) Priority: 18.04.2002 IT PI20020025
(43) Date of publication of application: 06.04.2005
(73) Proprietor: North European Patents and Investments H.S.A., 2419 Luxemburg (LU)
(72) Inventor: BARACCO, Pietro, I-50123 Firenze (IT); BARACCO, Stefano, I-59100 Prato Po (IT)
(74) Representative: Celestino, Marco
(86) International application number: PCT/IB2003/001476
(87) International publication number: WO 2003/088690

(56) References cited:
- WO-A-00/44151
- WO-A-01/58178
- WO-A-01/72063

## Description

### Field of the invention

The present invention relates to the field of radio communication and in particular it relates to a method for changing the content of a message exchanged between two telephones.

The invention relates also to an apparatus that carries out this method.

### Description of the prior art

The advent of radio communication systems has revolutioned the telecommunication industry. In particular, the cellular telephones, which connect users practically everywhere, have changed sensibly the personal relationships both in the work and in private life.

A cellular telephone allows an user to communicate by the voice, or by messages, with another person, for example while travelling by car, or by bus, while walking downtown, or while checking-in at the airport.

In particular, the possibility of sending messages by a mobile telephone to another represents a way for communicating with a person even if that cannot be momentarily available. This opportunity is presently offered also by the cable telephone network that permits sending and receiving messages by means of enabled telephones.

The transmission of such messages is carried out by radio communication networks, which use standards adopted nationally and internationally, such as GSM (Global System for Movable communication), CDMA (Code Division Multiple Access), TDMA (Time Division Multiple Access), PCS (Personal Communication Service), GPRS (General Packed Radio Service), W-CDMA (Wideband Code Division Multiple Access), EDGE (Enhanced Data rates for Global Evolution), UMTS (Universal Movable Telecommunication System).

The message services are the SMS (Short Message Service), the EMS (Enhanced Message Service), the SMART MESSAGING, (Flash Message) and the MMS (Multimedia Messaging Service).

In particular, the SMS is a universal standard that allows the users of cellular or cable telephones, which support it, to send and receive messages with a text content that can comprise a predetermined maximum number of alphanumerical characters.

In the alphabetical coding system of the European standard GSM the maximum number of characters is 160, in the Cyrillic it is 140 and with UCS2 (Turkish, Greek, Arab, Chinese, Thai, etc.) it is 70 characters. Presently, the SMS is the most common messaging system.

The evolution of SMS has led to EMS, for incorporating in a SMS text message some graphics, images, animations and sounds.

In this context also SMART MESSAGE is used, a standard developed by Nokia and universally recognized, which allows to add graphical, audio and video content to normal SMS text messages.

Both the SMART MESSAGE and the EMS standards are made linking several SMS to one another.

The Flash Message, also called SMS of class 0, is a special text message, improved from the SMS message. Its content is displayed directly on the display of the mobile phone.

The MMS Multimedia Messaging Service is a universal standard that allows the users of mobile phones that support it to send and receive messages with content of text, images, graphics, sounds, audio clips and video clips. The structure of the MMS consists of one or more pages or "slides", each containing two regions, one for the text and one for the images. The pages, furthermore, can be timed, as well as to them sounds can be appended, and they can be displayed. Each page, or slide, has the same layout. The MMS are then an extension of the concept of SMS, are also called multimedia messages.

Concerning SMS, the cost of the messages is independent from the length of the text as sent, which only seldom achieves the maximum allowed, therefore, the user spends the same cost for a single word and for a long text within the limits.

The same occurs for other types of the above cited messages, EMS, SMART MESSAGE and MMS, where the cost of the sent message is fixed, or calculated for blocks of fixed length, or calculated as packages of delivered data; therefore, except from rare cases, a residual space not exploited by the user is always present.

The wide variety of communication systems, capable of satisfying the requests of the users, has determined a quick diffusion and a boom in the sales of mobile phones.

In addition, the access to this service also through the more traditional cable telephone network, has given still new opportunities to the market. Such a wide population of users, for example, could be reached by advertisements through messages so that the industry can rely on a much higher number of potential customers.

WO0158178 describes equipment for supplementing and forwarding short text messages transmitted using a mobile telephone, where a supplementary text message containing advertising is added to a primary text message. With this system, it is not sure whether the supplementary text message is actually received by the addressee, this depending on a remaining residual space in the primary message with respect to a maximum admitted length.

### Summary of the invention

It is an object of the present invention to provide a method for changing the content of a message sent from a first telephone to a second telephone that allows an user to save a part or the whole value of an unused portion of a message.

It is also object of the present invention to provide a method for exploiting an unused portion of a message for sending advertisement messages from authorised companies.

These and other objects are achieved by the method for changing the content of a message according to the present invention, whose main feature is that it comprises the steps of:
- sending a message, consisting of an original content, from a first telephone and addressed to a second telephone;
- decoding the sent message, for extracting an object or a list of objects making up the original content;
- creating a final content formed by an advertisement additional content to which the original content extracted from the sent message is associated;
- coding the final content;
- introducing the final content in the sent - message, at the location of the original content;
- sending the modified message to the second telephone.

According to the invention, the content can comprise a text with alphanumerical characters (SMS), or it can be of multimedia type, with audio, video, images, etc. and can also be a combination of such types of content. Therefore, the succession of steps above described can be easily implemented according to the type of content to modify.

In particular, if the content of the message comprises a text formed by a determined number of alphanumerical characters (SMS), starting from this original text the following steps are carried out:
- sending a message, containing a determined number of alphanumerical characters, called original text, from a first telephone and addressed to a second telephone;
- decoding the sent message, for extracting the alphanumerical characters that make up the original text, and said number of characters;
- creating a final text formed by a string of advertisement text and by the original text extracted from the sent message;
- coding the final text;
- introducing the final text in the sent message, at the location of the original text;
- sending the sent message, modified and coded, to the second telephone.

In this case, the method for changing a message, sent from a first telephone to a second telephone, according to the invention, calculates the number of characters that make up a message, exploiting the principle according to which a text is nothing else than a string of characters arranged according to a precise order.

The sent message comprises, in particular, an advertisement string of length *l_ad* formed by a minimum number of characters, whereby being *l_max* the allowed maximum length for the message, the user knows that an original text is available, in order to save money, as a string of characters l_in of maximum length less than l_max-*l*_*ad*. The maximum length *l_max* is set by the SMS standard.

Therefore, the step of creating the modified text provides the following steps:
- opening a string of text at first blank, in which the final text is inserted;
- introducing, in the blank text string, an advertisement string of length *l_ad;*
- adding the original text extracted from the sent message for a length l_in.

The method for changing a message, sent from a first telephone to a second telephone intervenes only on the text of the messages with length less than *l_max-l_ad.* If the user authorizes the change of all the messages, in the messages wherein *l_ad+l_in>l_max,* the original text is truncated at a length *l_max-l_ad* at the achievement of the maximum length.

In particular, for calculating the number of characters that make up the original text and the advertisement string and for determining the position of each character in the message, a generic index i can be used. Starting from a value of index i equal to zero, a value of index i is given to each character incrementing it of one at each step and scanning the message from left to right.

Starting from the text inserted as advertisement string, the final text is computed character by character until the cycle has ended the characters.

This way the number of characters that make up the advertisement text to be associated to the original text can be determined.

Then, at the tail of the string of advertisement text the original text is inserted, and at the same time, with a process similar to that already described, the calculus is carried out of the number of characters that make up the modified message, comprising the advertisement text associated to the original text.

Advantageously, the maximum length possible for an original message is preliminarily determined and communicated to the user, in order to avoid the drawback of sending a not complete message or for which the user cannot save money.

Therefore, the user will pay only a part of the cost of the sent message, leaving the remainder of the cost to the advertising company, that on the other hand contacts this way a wider number of users.

Then, the user has to be aware of saving money only if its message is shorter than the value *l_max-l_ad,* or can choose of saving on all the messages, being aware that if the text of the message is longer than *l_max-l_ad* it will automatically be truncated at the achievement of this value.

Alternatively, if the message is of multimedia type (MMS), i.e. the content of the message comprises audio, video, text, images, the modified message provides a minimum size for the advertisement additional content having size *Slogan_size* and an overall maximum size *Max_Message_size,* whereby the content of the original sent message, having size *Message_size,* cannot exceed a predetermined length (*Max_Message*_*size*-Slogan_size).

In particular, in a method for changing the content of a message, the generation of the modified content provides the following steps:
- introducing, in a field where the content of the original message is present, in particular called MMS_content_location, said advertisement additional content, called in particular *Slogan_content,* having a predetermined size, called in particular Slogan_size;
- adding to the body of the original message, or *Message_Body,* the body of the advertisement additional content, or *Slogan_Body.*

### Brief description of the drawings

Further characteristics and the advantages of the method for changing the content of a message sent from a first telephone to a second telephone will be made clearer with the following description of an embodiment thereof, exemplifying but not limitative, with reference to the attached drawings, wherein:
- figure 1 shows a diagrammatical view of the method for changing the content, in particular the text, of a message sent from a first telephone to a second telephone, according to a first embodiment of the invention;
- figure 2 shows a flow-sheet of the process that achieves the method of figure 1;
- figure 3 shows the method of figure 2, using a diagrammatic representation;
- figures 4A and 4B show diagrammatically the process of changing the content of a message of multimedia type sent from a first telephone to a second telephone, according to an embodiment alternative to that of figure 1;
- figure 5 shows diagrammatically in a flow-sheet the process through which an original message is modified into a final message according to an embodiment of figures 4A and 4B.

### Description of a preferred embodiment

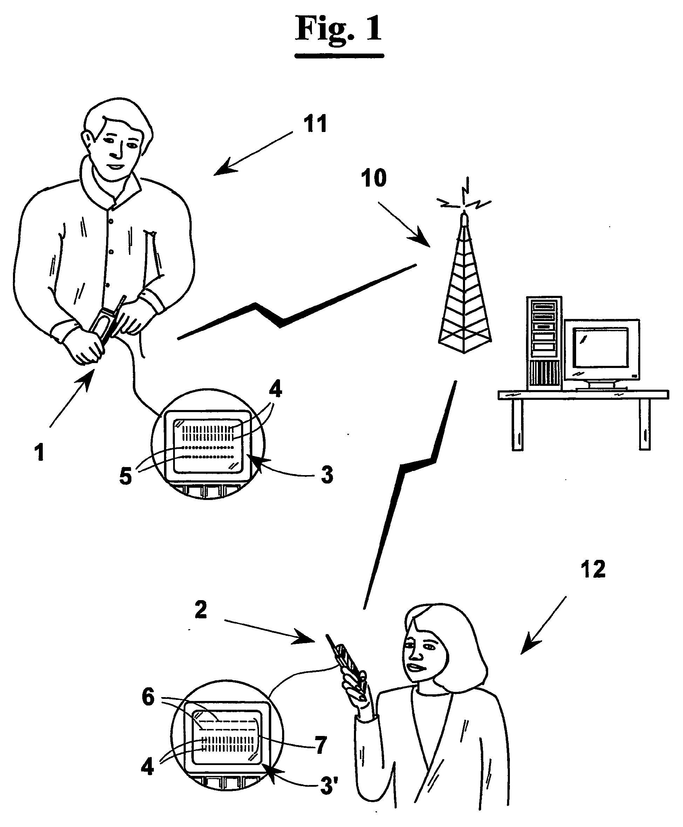

In figure 1 a first possible embodiment is diagrammatically shown of the method for changing the content of a message sent from a first telephone 1 to a second telephone 2, for example two cellular telephones. It comprises a step of reception by a "converting device" 10 of a message 3 sent by an individual 11 from a first telephone 1.

Message 3, if the content is a text (SMS) as in figure 1, comprises a portion of alphanumerical characters 4, which make up the text of the actual message 3, and a portion of blank characters 5.

The "converting device" 10 decodes message 3. In particular, both the fields that relate to the length and the original text of the message are decoded. In other words, the decoding step allows to determine the original text 4 of message 3 and then to change it through the process shown diagrammatically hereinafter.

In particular, the "converting device" 10 associates to the original text 4 of message 3, of known length, an added text 6, for example an advertisement text, having a predetermined length.

The final text 7, obtained by the association of the original text 4 and of the added text 6, is then coded, with the same attributes of message 3, which then becomes a modified message 3', which is sent to telephone 2 as originally addressed.

The user 12 that receives message 3' will then read, on the display of telephone 2, a text 7 comprising the added message 6 and the original text 4. According to a contract between the user of the telephone and the telecommunications company, the length of the original text 4 should not exceed a predetermined value to prevent the original text from being truncated.

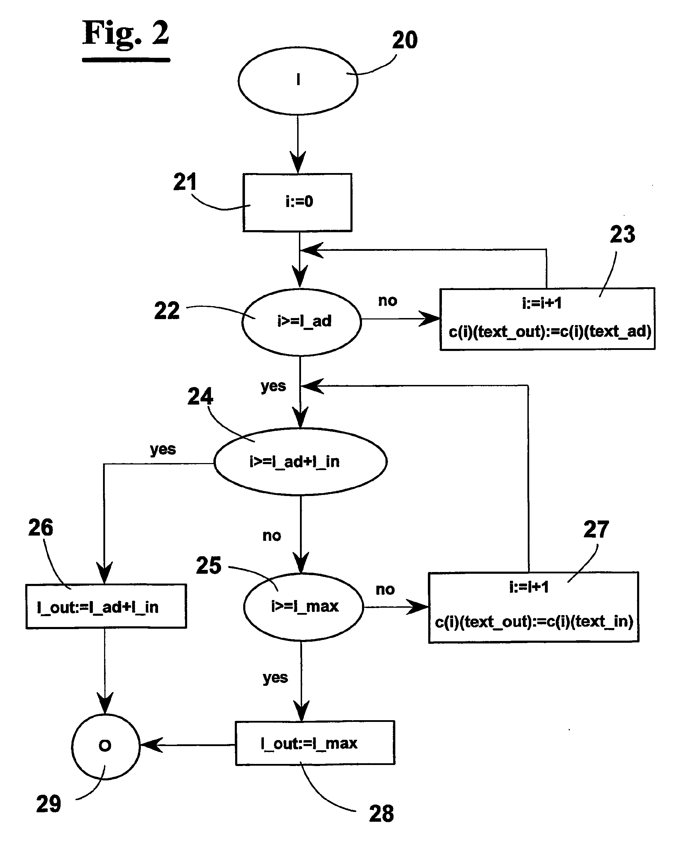

Figure 2 shows the flow-sheet that describes diagrammatically the process through which the original message 3 is modified in the final message 3'.

In particular, to the original text text_in of length l_in an advertisement string text_ad is added, formed by a number of characters *l_ad,* being *l_max* the maximum length of the final message.

In figure 2, furthermore, the starting text of the message is indicated as text_in, the added text is indicated as text_ad and the final text is indicated as text out.

The step of creating the modified message provides the following steps:
- starting the procedure (step 20) and giving the value 0 to index i (step 21);
- opening a second text string of blank characters, i.e. said final text, *text_out,* and introducing in it an advertisement string, *text_ad,* of length *l_ad,* steps 22 and 23, causing each i^{th} character of *text_out* to correspond to each i^{th} character of *text_ad;*
- adding for a length *l_in* the string of original text text_in extracted from the sent message, steps 24, 25 and 27, causing each subsequent *i^{th}* character of *text_out* to correspond to each *i^{th}* character of *text in;*
- outputting the final message of length *l_out,* steps 26 and 29.

The length values are shown by a number of characters and indexed with i.

The value of index i, starting from zero, is incremented of one in succession, scanning the string of characters from left to right, in order to give to each character of the string a corresponding value of the index i.

The method of changing the original message into a final message is carried out only for messages whose text is less or equal to *l_max-l_ad.*

The change of all the messages sent by an user and then also of those with text long more than *l_max-l_ad* characters is made under the authorisation of the sender of the message, which approves that the messages sent with text longer than *l_max-l_ad* will be truncated at the achievement of this value. Then, in case that *l_ad+l_in>l_max,* i.e. *l_max* is exceeded, the original text is truncated at the achievement of the maximum length (step 28).

Notwithstanding in figure 2 the added text is inserted before the original text, it is not excluded that it is inserted in an intermediate position or at the end of the message.

In figures from 3A to 3C the process is diagrammatically shown of changing a first message 3 into a second message 3' by a "converting device" 10.

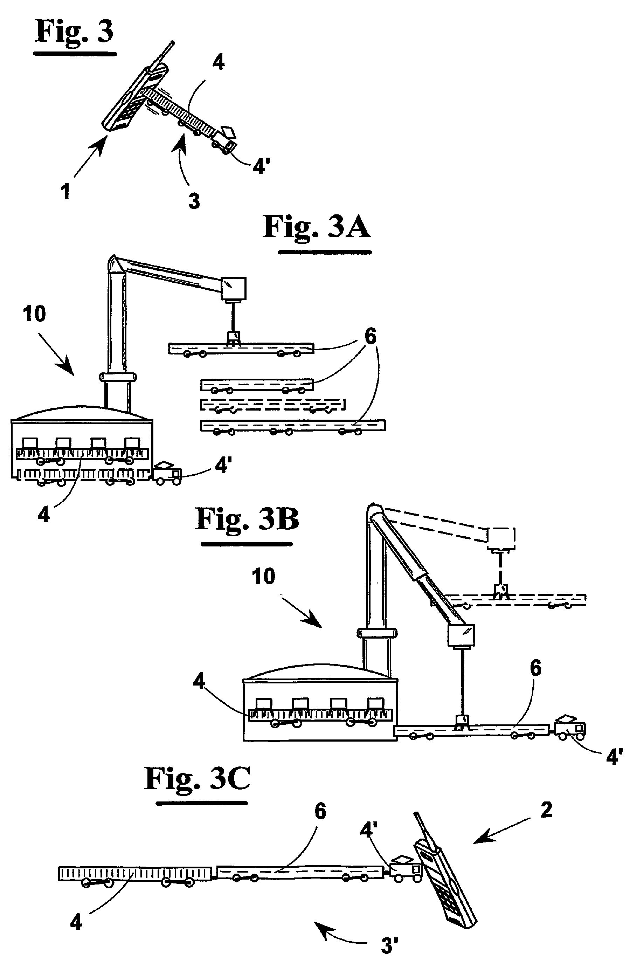

According to this figure, first message 3 (figure 3), sent by the first telephone 1, is represented as a railway wagon 4 pulled by a locomotive 4'. In the symbolism used locomotive 4' represents the part of the message known as SMS Header, where the data relative to the sender are contained, such as telephone number, sending date and time, and the addressee number.

Message 3 comes then in the station (figure 3A), representing the "converting device" 10, to be analysed.

Then, the "converting device" 10 selects an advertisement string 6 to insert, among a variety of advertisement strings having different length *l_ad.*

The modified message 3', consisting of an advertisement string 6 and in string 4 of the original message 3, is then sent to the addressee 12, using always the same SMS Header 4' (figure 3C).

Owing to this technical solution, according to the invention, the result is achieved of allowing, at the choice of the user, the addition of advertisement messages addressed to a large number of users.

The "converting device" 10 can be arranged, for example, in an exchange site (or in one of exchange sites) where the calls and all the messages are put through. Of course, the "converting device" 10 can also be located in a desired point of a telephone network.

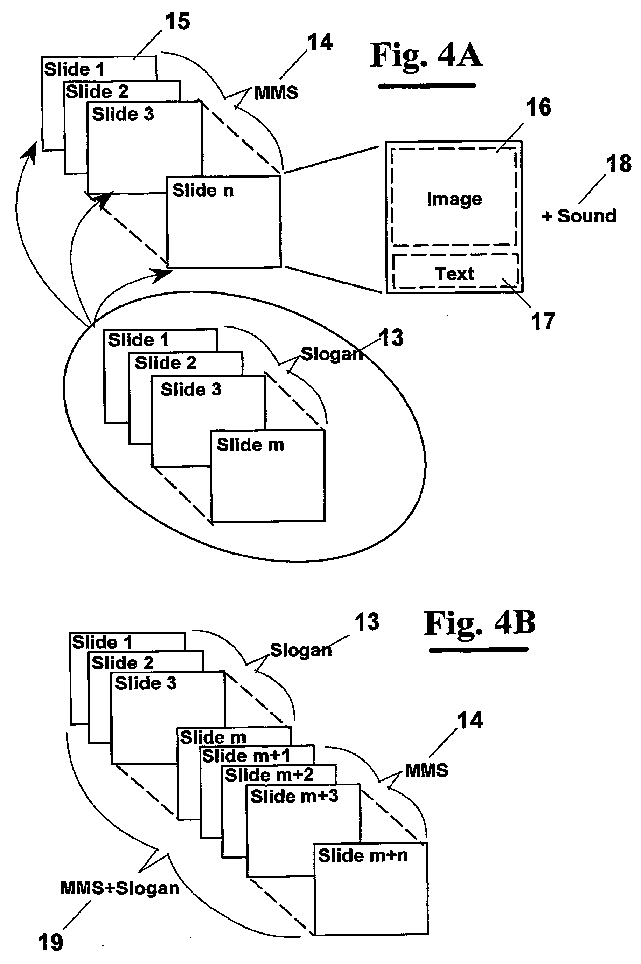

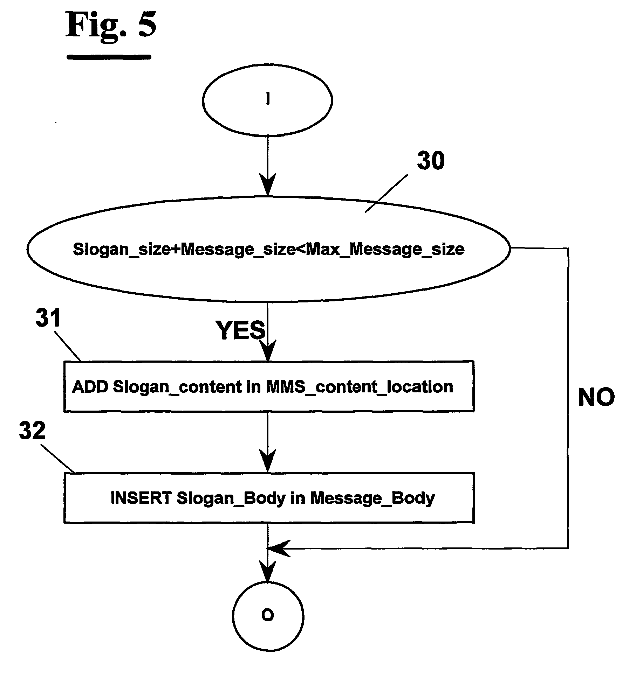

Alternatively or in addition to the text, the message may have other multimedia content, i.e. audio, video or images (MMS). In figures 4A, 4B and 5 the process is diagrammatically shown through which an original message 14 comprising a content of multimedia type (MMS) is modified in the final message 19, which is also of the same type.

In particular, in figures 4A and 4B the process is diagrammatically shown of changing a multimedia MMS message 14 into another multimedia message 19 consisting of an advertisement 13 plus the original message 14. More in detail, the original MMS sent by the user consists of one or more pages or "slides" 15, each of which consists of a portion for image 16, a portion for text 17, and to which an audio content 18 can be associated. The multimedia messages MMS are similar to e-mails, and for this reason to the message a video can be appended. To this purpose also the advertisement can be a video clip.

In the block diagram of figure 5 the size of the multimedia message, for example expressed in bytes, is indicated as *Message_size,* the size in bytes of the advertisement content 13, which can be images, text, audio, video, etc., is indicated as *Slogan_size* and finally the maximum limit in bytes of the original MMS message is indicated as *Max_Message_size.*

Normally, the parameter *Max_Message_size* is set by the telephone company or is delimited by the maximum memory of the telephone. If the size in bytes of the original MMS (sent by the user) is less than the above described maximum size minus the size in bytes of the advertisement content, step 30, to the MMS message an advertisement content is added, steps 31 and 32. More in detail, the advertisement content 13, or *Slogan*_*content,* i.e. the file containing the advertisement in the final message 19, is added in a field *MMS_content_location* of the MMS given for the content of the multimedia message, step 31.

Finally in the *Message_Body,* i.e. the body of the original MMS message, which is written in a language typical for MMS, the body of the advertisement content 13 is inserted, i.e. the *Slogan_Body,* written according to the language typical for MMS, step 32.

The position where the "body" or *Slogan_Body* is inserted in the *Message_Body* is independent from the content of the message same, normally the *Slogan_Body* is at the head or the tail of the *Message_Body.*

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for changing the content of a message comprising the steps of :
- sending a message (3), consisting of an original content (4, 14) having a certain size, from a first telephone (1) and addressed to a second telephone (2); and **characterised in that** it comprises the steps of:
- decoding the sent message (3) and extracting an object or a list of objects making up said original content (4, 14);
- creating a final content (3', 19) formed by an advertisement additional content (6, 13) having a predetermined size, to which the original content (4, 14) is associated as extracted from said sent message (3);
- coding said final content (3', 19) ;
- introducing said final content (3', 19) in said sent message (3), at the location of said original content;
- sending said sent message (3', 19), modified and coded, to said second telephone.
- wherein said sent message (3) provides a minimum size *(l_ad ; Slogan_size)* for an advertisement content (6, 13) and a maximum size *(l_max; Max_Message_size),* whereby the content of the first message (4, 14), having a predetermined size *(l_in, Message_size)* cannot exceed a maximum size *(l_max-l_ad; Max_Message_size-Slogan_size),* and
- whereby said advertisement content *(l₋ad; Slogan_size)* is introduced with said sent message *(l-in, Message_size)* so that said sent message (3', 19), modified and coded, does not exceed said maximum size *(l_max; Max_Message_size).*

2. Method according to claim 1, wherein said content to change is text, having a determined number of alphanumerical characters, called original text
**characterised in that**:
- said step of decoding the sent message (3) provides the extraction of alphanumerical characters that make up said original text (4) and the number of said characters;
- said step of creating a final content (3', 19) provides creating a final text (7) formed by a string of advertisement text (6), to which the original text (4) extracted from said sent message (3) is associated;
- said step of coding said final content (3', 19) provides coding said final text (7);
- said step of introducing said final content (19) in said sent message (3) provides introducing said final text (3') in said sent message, at the location of said original text (4);
- sending said sent message (3', 19), modified and coded, to said second telephone.

3. Method for changing the content of a message, according to claim 2, wherein said step of creating said modified text (3') provides the following steps:
- opening a string of text, at first blank, wherein said final text (7) has to be inserted;
- introducing, in the blank text string, said advertisement string (6) of length *l_ad;*
- adding the original text (4), as extracted from the sent message, up to a length l_in.

4. Method for changing the content of a message according to claim 3, wherein the original text (4) of the message is modified by introducing an advertisement string (6) only if l_in <= *l_max-l_ad,* or it is truncated at the achievement of this value.

5. Method for changing the content of a message according to claim 4, wherein if *l_ad+l_in>l_max* said original text (4) is truncated at a length *l_max-l_ad* at the achievement of said maximum length.

6. Method for changing the content of a message according to claim5, wherein for calculating the number of characters that make up said original text (4) and said advertisement string (6), and for determining the position of each character in the message, a generic index i is used, starting from a value equal to zero, and a value is given to said index i for each character incrementing it of one at each step, scanning the message from left to right.

7. Method for changing the content of a message, according to claim 1, wherein said step of creating said modified content (3', 19) provides the following steps:
- introducing, in a field of the original content (4, 14), in particular called MMS_content_location, said advertisement additional content (6, 13), in particular called *Slogan_content,* having a predetermined size, in particular Slogan_size;
- adding to the body of the original message (3), in particular *Message_Body,* the body of the advertisement additional content (6, 13), in particular *Slogan_Body.*

8. Method for changing the content of a message according to claim 1, wherein said content comprises at least one image and/or at least one text and/or at least one audio and/or at least one video.

## Patentansprüche

1. Verfahren zum Ändern des Inhalts einer Nachricht, mit den folgenden Schritten:
Senden einer Nachricht (3), die aus einem ursprünglichen Inhalt (4,14) mit einer bestimmten Größe besteht, von einem ersten Telefon (1), wobei diese an ein zweites Telefon (2) gerichtet ist, und **dadurch gekennzeichnet, dass** es die folgenden Schritte umfasst:
- Decodieren der gesendeten Nachricht (3) und Extrahieren eines Objekts oder einer Objektliste, welche den ursprünglichen Inhalt (4,14) bildet/bilden,
- Erzeugen eines endgültigen Inhalts (3',19), der durch einen zusätzlichen Werbeinhalt (6,13) mit einer vorbestimmten Größe gebildet wird, dem der ursprüngliche Inhalt (4,14), so wie er aus der gesendeten Nachricht (3) extrahiert wird, zugeordnet wird,
- Codieren des endgültigen Inhalts (3',19),
- Einfügen des endgültigen Inhalts (3',19) in die gesendete Nachricht (3) an der Stelle des ursprünglichen Inhalts,
- Senden der gesendeten Nachricht (3',19), modifiziert und codiert, an das zweite Telefon,
- wobei die gesendete Nachricht (3) eine Minimalgröße *(l_ad;Slogan_size)* für einen Werbeinhalt (6,13) und eine Maximalgröße *(l_max;Max_Message_size)* aufweist, wodurch der Inhalt der ersten Nachricht (4,14) mit einer vorbestimmten Größe *(l_in;Message_size)* eine Maximalgröße *(l_max l_ad;Max_Message_size-Slogan*_*size)* nicht überschreiten kann, und
- wobei der Warbeitahalt *(l_ad;Slogan_size)* mit der gesendeten Nachricht *(l_in;Message_size)* eingefügt wird, so dass die gesendete Nachricht (3',19), modifiziert und codiert, die Maximalgröße *(l_max;Max_Message_size)* nicht überschreitet.

2. Verfahren nach Anspruch 1, wobei der zu ändernde Inhalt ein Text mit einer vorbestimmten Anzahl von alphanumerischen Zeichen ist, der als Originaltext bezeichnet wird, **dadurch gekennzeichnet, dass**:
- der Schritt des Decodierens der gesendeten Nachricht (3) das Extrahieren von alphanumerischen Zeichen beinhaltet, welche den Originaltext (4) und die Anzahl der zeichen bilden,
- der Schritt des Erzeugens eines endgültigen Inhalts (3',19) das Erzeugen eines endgültigen Texts (7) beinhaltet, der durch einen String von Werbetext (6) gebildet ist, dem der aus der gesendeten Nachricht (3) extrahierte Originaltext (4) zugeordnet wird,
- der Schritt des Codierens des endgültigen Inhalts (3',19) das Codieren des endgültigen Texts (7) beinhaltet,
- der Schritt des Einfügens des endgültigen Inhalts (19) in die gesendete Nachricht (3) das Einfügen des endgültigen Texts (3') in die gesendete Nachricht an der Stelle des Originaltexts (4) beinhaltet,
- es das Senden der gesendeten Nachricht (3',19), modifiziert und codiert, an das zweite Telefon umfasst.

3. Verfahren zum Ändern des Inhalts einer Nachricht nach Anspruch 2, wobei der Schritt des Erzeugens des modifizierten Texts (3') die folgenden Schritte beinhaltet:
- Öffnen einer zunächst leeren Text-String, wobei der endgültige Text (7) einzusetzen ist,
- Einfügen des Werbe-Strings (6) einer Länge *l_ad* in den leeren Text-String,
- Addieren des Originaltexts (4) so, wie er aus der gesendeten Nachricht extrahiert wurde, bis zu einer Länge *l_in.*

4. Verfahren zum Ändern des Inhalts einer Nachricht nach Anspruch 3, wobei der Originaltext (4) der Nachricht durch Einfügen einer Werbe-String bzw. -Kette (6) nur dann modifiziert wird, wenn *l_n ≤ l*_*max* - 1_at ist, oder er wird nach Erreichen dieses Werts abgebrochen.

5. verfahren zum Ändern des Inhalts einer Nachricht nach Anspruch 4, wobei, wenn *l_ad* + *l_in > l_max* ist, der Originaltext (4) bei einer Länge *l_max - l_ad* bei Erreichen der maximalen Länge abgebrochen wird.

6. Verfahren zum Ändern des Inhalts einer Nachricht nach Anspruch 5, wobei zum Berechnen der Anzahl von Zeichen, welche den Originaltext (4) und den Werbe-String (6) bilden, und zum Bestimmen der Position jedes Zeichens in der Nachricht ein generischer Index i verwendet wird, beginnend bei einem Wert = 0, und dem Index i für jedes Zeichen ein Wert gegeben wird, der bei jedem Schritt um 1 erhöht wird, wobei die Nachricht von links nach rechts abgetastet wird.

7. Verfahren zum Ändern des Inhalts einer Nachricht nach Anspruch 1, wobei der Schritt des Erzeugens des modifizierten Inhalts (3',19) die folgenden Schritte beinhaltet:
- Einfügen in ein Feld des ursprünglichen Inhalts (4,14), das insbesondere als *MMS_content_location* bezeichnet wird, den zusätzlichen Werbeinhalt (6,13), der insbesondere als *Slogan_content* bezeichnet, mit einer vorbestimmten Größe, insbesondere einer Slogan_size,
- Addieren zum Körper der ursprünglichen Nachricht (3), insbesondere einem *Message_body,* den Körper des zusätzlichen Werbeinhalts (6,13), insbesondere einem *Slogan_body.*

8. Verfahren zum Ändern des Inhalts einer Nachricht nach Anspruch 1, wobei der Inhalt mindestens ein Bild und/oder mindestens einen Text und/oder mindestens einen Audio-Inhalt und/oder mindestens einen Video-Inhalt umfasst.

## Revendications

1. Procédé destiné à changer le contenu d'un message comprenant les étapes suivantes :
- envoyer un message (3), constitué d'un contenu original (4, 14) ayant une certaine taille, à partir d'un premier téléphone (1) et adressé à un second téléphone (2) ; et **caractérisé en ce que** cette étape comprend les étapes suivantes :
- décoder le message (3) envoyé et extraire un objet ou une liste d'objets composant ledit contenu original (4, 14),
- créer un contenu final (3', 19) formé d'un contenu publicitaire supplémentaire (6, 13) ayant une taille prédéterminée, auquel le contenu original (4, 14) est associé tel qu'extrait dudit message (3) envoyé;
- coder ledit contenu final (3', 19);
- introduire ledit contenu final (3', 19) dans ledit message (3) envoyé, au niveau de l'emplacement dudit contenu original ;
- envoyer ledit message (3', 19) envoyé, modifié et codé, audit second téléphone ;
- dans lequel ledit message (3) envoyé fournit une taille minimale *(l_pub*; *Slogan_taille)* pour un contenu publicitaire (6, 13) et une taille maximale *(l_max; Max_Message_taille),* moyennant quoi le contenu du premier message (4, 14) ayant une taille prédéterminée *(l_in, Message_taille)* ne peut dépasser une taille maximale *(l_max-l_pub ; Max_Message_taille-Slogan_taille)* ; et
- moyennant quoi ledit contenu publicitaire *(l_pub Slogan_taille)* est introduit avec ledit message envoyé *(l_in, Message_taille)* de sorte que ledit message (3', 19) envoyé, modifié et codé, ne dépasse pas ladite taille maximale *(l_max* ; *Max_Message_taille).*

2. Procédé selon la revendication 1, dans lequel ledit contenu à changer est du texte, ayant un nombre prédéterminé de caractères alphanumériques appelés texte original, **caractérisé en ce que** :
- ladite étape de décodage du message (3) envoyé fournit l'extraction de caractères alphanumériques qui composent ledit texte original (4) et le nombre desdits caractères ;
- ladite étape de création d'un contenu final (3' 19) fournit la création d'un texte final (7) formé d'une chaîne de textes publicitaires (6), auquel le texte original (4) extrait dudit message (3) envoyé est associé;
- ladite étape de codage dudit contenu final (3', 19) fournit un codage dudit texte final (7);
- ladite étape d'introduction dudit contenu final (19) dans ledit message (3) envoyé fournit l'introduction dudit texte final (3') dans ledit message envoyé, au niveau de l'emplacement dudit texte original (4) ;
- envoyer ledit message (3', 19) envoyé, modifié et codé audit second téléphone.

3. Procédé destiné à changer le contenu d'un message, selon la revendication 2, dans lequel ladite étape de création dudit texte modifié (3') fournit les étapes suivantes :
- ouvrir une chaîne de texte, au niveau d'un premier caractère d'espacement, dans lequel ledit texte final (7) doit être inséré ;
- introduire, dans la chaîne de texte du caractère d'espacement, ladite chaîne publicitaire (6) d'une longueur *l_pub ;*
- ajouter le texte original (4), tel qu'extrait du message envoyé, jusqu'à une longueur *l_in.*

4. Procédé destiné à changer le contenu d'un message selon la revendication 3, dans lequel le texte original (4) du message est formé en introduisant une chaîne publicitaire (6) uniquement si *l_in* <= *l_max_l_pub,* ou il est tronqué au niveau de l'achèvement de cette valeur.

5. Procédé destiné à changer le contenu d'un message selon la revendication 4, dans lequel si *l_pub+l_in>l_max*, ledit texte original (4) est tronqué au niveau d'une longueur *l_max-l_pub* au niveau de l'achèvement de ladite longueur maximale.

6. Procédé destiné à changer le contenu d'un message selon la revendication 5, dans lequel, pour calculer le nombre de caractères qui comportent ledit texte original (4) et ladite chaîne publicitaire (6), et pour déterminer la position de chaque caractère dans le message, un indice générique i est utilisé, en démarrant d'une valeur égale à zéro, et une valeur est donnée audit indice i pour chaque caractère l'incrémentant de un à chaque étape, en balayant le message de gauche à droite.

7. Procédé destiné à changer le contenu d'un message selon la revendication 1, dans lequel ladite étape de création dudit contenu (3', 19) modifié fournit les étapes suivantes :
- introduire, dans un champ du contenu original (4, 14), appelé en particulier MMS_contenu_emplacement, ledit contenu publicitaire supplémentaire (6, 13), appelé en particulier *Slogan_contenu,* ayant une taille prédéterminée, en particulier, Slogan_taille ;
- ajouter au corps du message original (3), en particulier, *Message_Corps,* le corps du contenu publicitaire supplémentaire (6, 13), en particulier, *Slogan_Corps.*

8. Procédé destiné à changer le contenu d'un message selon la revendication 1, dans lequel ledit contenu comprend au moins une image et/ou au moins un texte et/ou au moins un élément audio et/ou au moins un élément vidéo.
